(19) Europäisches Patentamt
European Patent Office
Office européen des brevets

(11) Veröffentlichungsnummer: **0 271 716**
**A2**

(12) # EUROPÄISCHE PATENTANMELDUNG

(21) Anmeldenummer: **87116706.0**

(51) Int. Cl.⁴: **C07F 7/08**

(22) Anmeldetag: **12.11.87**

(30) Priorität: **17.12.86 DE 3642988**

(43) Veröffentlichungstag der Anmeldung:
**22.06.88 Patentblatt 88/25**

(84) Benannte Vertragsstaaten:
**BE DE FR GB IT NL**

(71) Anmelder: **SCHERING AKTIENGESELLSCHAFT**
**Berlin und Bergkamen**
**Waldstrasse 14 Postfach 15 40**
**D-4709 Bergkamen(DE)**

(72) Erfinder: **Müller, Karl Heinz, Dr. Dipl.-Chem.**
**Grevinghof 55**
**D-4715 Werne(DE)**

(54) **Herstellung von Dialkyl(alkyldimethylsilanolato)aluminium-Verbindungen.**

(57) Die vorliegende Erfindung betrifft die Herstellung von Dialkyl(alkyldimethylsilanolato)aluminium-Verbindungen der Formel

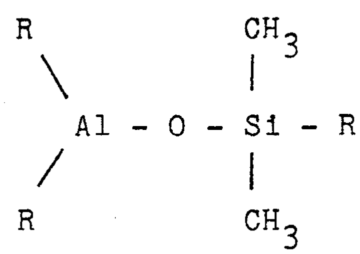

aus linearen Polydimethylsiloxanen und Aluminiumtrialkylen mit primären Alkylgruppen.

EP 0 271 716 A2

## Herstellung von Dialkyl(alkyldimethylsilanolato)aluminium-Verbindungen

Die vorliegende Erfindung bezieht sich auf die Herstellung von Dialkyl(alkyldimethylsilanolato)-aluminium-Verbindungen der Formel

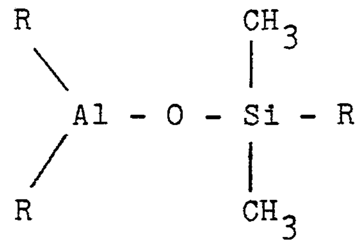

aus linearen Polydimethylsiloxanen und Aluminiumtrialkylen mit primären Alkylgruppen.

Dialkyl(alkyldimethylsilanolato)aluminium-Verbindungen sind gesuchte Substanzen. Besonders interessant ist ihre Anwendung als Kokatalysator bei der Polymerisation von Olefinen mit Ziegler-Katalysatoren.

Polydimethylsiloxane reagieren schon beim Raumtemperatur mit Aluminiumtrialkylen. Man erhält bei Zugabe von 3 - 5 % Aluminiumtrialkyl zu einem linearen Polydimethylsiloxan in wenigen Minuten ein farbloses, elastisches Gel (DE-PS 10 18 226).

Hochmolekulare Polydimethylsiloxane können durch Erhitzen mit Aluminiumtrialkylen auch alkyliert und dadurch in niedrigermolekulare, aber höheralkylierte Polyalkylmethylsiloxane übergeführt werden. Im Falle von hochmolekularen Polydimethylsiloxanen und Triethylaluminium als Ausgangsmaterialien erhält man niedrigermolekulare Polyethylmethylsiloxane (DE-PS 954 645).

Durch Umsetzung eines Polysiloxans vom Siliconöltyp mit einem Aluminiumtrialkyl sollen Alkylsiloxalane zugänglich sein (DE-OS 24 39 775). Die Herstellung solcher Verbindungen nach dieser Methode wird dabei jedoch nicht explicit beschrieben. Nach DE-OS 24 39 775 sollen Alkylsiloxalane auch durch Umsetzung eines cyclischen Siloxans mit einem Aluminiumtrialkyl zugänglich sein. Als Beispiel wird die Herstellung von Dimethyläthyldiäthylsiloxalan aus Octamethylcyclotetrasiloxan mit Triethylaluminium bei 50 °C beschrieben. Wie gezeigt wurde, reagieren aber Octamethylcyclotetrasiloxan und Triethylaluminium bei 50 °C nicht zu äthyl Dimethyldiäthylsiloxalan (EP-A 0 133 750).

Ein Verfahren, das die Herstellung von Dialkyl(alkyldimethylsilanolato)aluminium-Verbindungen aus einem Alkyldimethylsilanol und einem Aluminiumtrialkyl ermöglicht, ist beschrieben (DE-OS 24 39 775). Alkyldimethylsilanole sind aber sehr empfindliche Substanzen, die leicht in Dialklytetramethyldisiloxane übergehen. Aus den letztgenannten Verbindungen, die zur Klasse der Hexaalkyldisiloxane gehören, und Aluminiumtrialkylen könnten in Analogie zu einem bekannten Verfahren vermutlich Dialkyl-(alkyldimethylsilanolato)aluminium-Verbindungen hergestellt werden (H. Jenkner, Zeitschrift für Naturforschung, 1959, Band B, Seiten 133 - 134). Ein großer Nachteil eines solchen Verfahrens bestünde aber darin, daß Siliziumtetraalkyle oder Trialkylsilane und Olefine in erheblichen Mengen als Nebenprodukte anfallen.

Triethyldimethylsiloxlaan kann als Isomerengemisch aus Octamethylcyclotetrasiloxan und Triethylaluminium bei Temperaturen von 170 - 250 °C hergestellt werden (EP-A 0 133 750). Dabei werden als Isomere
$(C_2H_5)(CH_3)_2SiOAl(C_2H_5)_2$,
$(C_2H_5)_2(CH_3)SiOAl(CH_3)(C_2H_5)$ und
$(C_2H_5)_3SiOAl(CH_3)_2)$
erhalten.

Im übrigen besitzt das Octamethylcyclotetrasiloxan bei 180 °C schon einen Dampfdruck von über 1013 mbar, was bei der technischen Herstellung einigen Aufwand nach sich zieht.

Es wurde nun ein Verfahren zur Herstellung von Dialkyl)alkyldimethylsilanolato)aluminium-Verbindungen der Formel

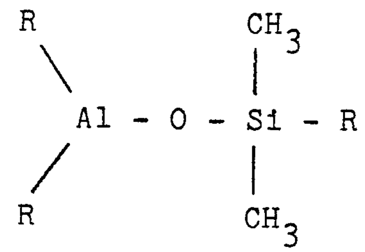

aus linearen Polydimethylsiloxanen und Aluminiumtrialkylen der Formel $AlR_3$, wobei R eine primäre Alkylgruppe mit einer C-Zahl von 1 bis 12 bedeutet, gefunden, das dadurch gekennzeichnet ist, daß man das Polydimethylsiloxan im Temperaturbereich von 150 bis 250 °C mit dem Aluminiumtrialkyl umsetzt, wobei solche Mengen an Polymethylsiloxan und Aluminiumtrialkyl eingesetzt werden, daß das Molverhältnis von Silizium zu Aluminium 0,8 bis 1,2 beträgt.

Das erfindungsgemäße Verfahren kann sowohl als Batch-Verfahren als auch kontinuierlich durchgeführt werden.

Lineare Polydimethylsiloxane sind als Handelsprodukte von verschiedenen Herstellern erhältlich. Es sind flüssige wasserklare Öle mit einer Viskosität von etwa 1 bis 1 000 000 $mm^2 \bullet s^{-1}$ bei 25 °C. Für das erfindungsgemäße Verfahren werden lineare Polydimethylsiloxane mit einer Viskosität von etwa 50 bis 5 000 $mm^2 \bullet s^{-1}$ bei 25 °C bevorzugt.

Aluminiumtrialkyle mit primären Alkylgruppen sind ebenfalls im Handel erhältlich. Geeignete Verbindungen sind beispielsweise Tri-n-hexylaluminium oder Tri-n-octylaluminium, insbesondere Triethylaluminium, Tri-n-propylaluminium, Tri-n-butylaluminium.

Um eine schnelle und glatte Umsetzung der Reaktionspartner mit einer praktisch quantitativen Ausbeute zu gewährleisten, muß die Reaktionstemperatur in einem Bereich von 180 bis 220 °C, vorzugsweise von 190 bis 210 °C liegen. Dabei ist es vorteilhaft, das Polydimethylsiloxan zunächst auf die Reaktionstemperatur zu erhitzen und das Aluminiumalkyl zuzudosieren.

In einem so hohen Temperaturbereich sind die erfindungsgemäß zu verwendenden Aluminiumtrialkyle normalerweise nicht beständig. Beispielswiese beginnt die Zersetzung von Triethylaluminium schon ab 120 °C. Zuerst bildet sich unter Abspaltung von Ethylen Diethylaluminiumhydrid, das dann ab ca. 180 °C unter Abscheidung von Aluminium zu zerfallen beginnt.

Das erfindungsgemäße Verfahren erlaubt überraschenderweise, die Reaktion mit einer praktisch quantitativen Ausbeute in die gewünschte Richtung zu lenken, ohne daß es zu störenden Nebenreaktionen durch Zersetzung von Aluminiumtrialkylen kommt. Ohne Berücksichtigung der endständigen Trimthylsiloxygruppen im Polydimethylsiloxan, deren Anteil um so mehr zu vernachlässigen ist, je höhermolekularer das Polydimethylsiloxan ist, läßt sich das erfindungsgemäße Verfahren folgendermaßen formulieren:

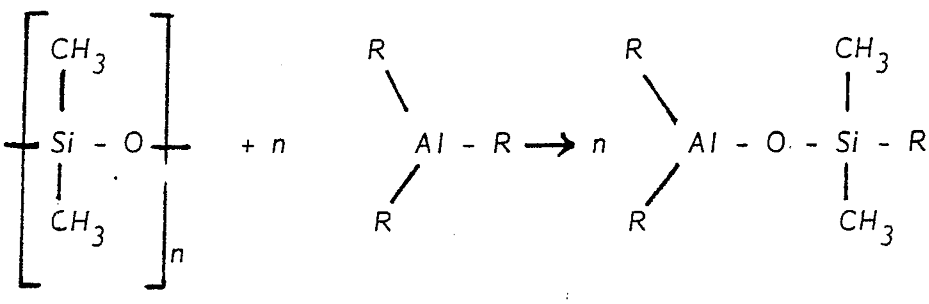

Überraschend wurde gefunden, daß die Dialkyl(alkyldimethylsilanolato)aluminium-Verbindungen als einheitliches Reaktionsprodukt erhalten werden, wenn man eine Reaktionstemperatur von 220 °C nicht überschreitet. Bei höheren Temperaturen wird eine partielle Isomerisierung beobachtet.

Bei der Durchführung des Verfahrens ist zu berücksichtigen, daß die Aluminiumtrialkyle und die Dialkyl(alkyldimethylsilanolato)aluminium-Verbindungen zu den Stoffen zählen, die an der Luft selbstentzündlich sind und mit Wasser äußerst heftig reagieren.

Die Erfindung wird durch folgende Beispiele weiter erläutert:

Beispiel 1

Herstellung von Diethyl(ethyldimethylsilanolato)aluminium

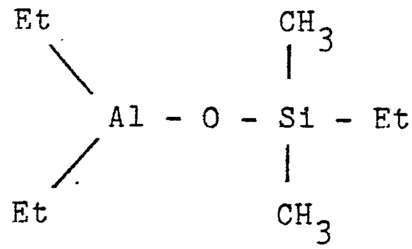

In einem 1-Liter-Dreihalskolben, der mit einem Rührer, einem Kühler, einem Tropftrichter und einem Stickstoff-Puffer-System versehen war, wurden 178,8 g lineares Polydimethylsiloxan mit einer Viskosität von 100 $mm^2 \cdot s^{-1}$ bei 25 °C und einem Si-Gehalt von 35,6 Gew.-% gegeben. In den 178,8 g Einsatzproduct waren 2,27 Mole Si enthalten.

Dieses Einsatzprodukt wurde unter Rühren auf 200 °C erhitzt. Danach wurden durch den Tropftrichter unter Stickstoff 260,5 g Triethylaluminium mit einem Al-Gehalt von 23,1 Gew.-% innerhalb von 1 Stunde und 20 Minuten bei 200 bis 210 °C zudosiert, und zwar in der Weise, daß das Triethylaluminium direkt in das Polydimethylsiloxan gelangte.

In den 260,5 g Triethylaluminium waren 2,24 Mole Al enthalten. Das Molverhältnis Si zu Al betrug demnach 1,02.

Nachdem das Triethylaluminium zugegeben war, wurde die Reaktionsmischung noch 1 Stunde bei 200 - 210 °C gehalten.

Nach dem Abkühlen wurden 436 g (99,2 % bezogen auf die eingesetzte Gesamtmenge) an Diethyl(ethyldimethylsilanolato)aluminium erhalten. Das Produkt ist eine farblose und klare Flüssigkeit.

<u>Beispiel 2</u>

Herstellung von Di-n-butyl(n-butyldimethylsilanolato)aluminium

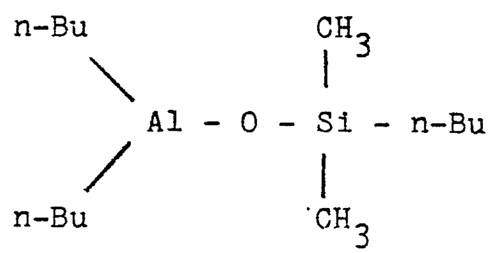

In einen 0,5-Liter-Dreihalskolben, der wie in Beispiel 1 ausgerüstet war, wurden 37,2 g lineares Polydimethylsiloxan (Viskosität bei 25 °C: 100 $mm^2 \cdot s^{-1}$; Si-Gehalt: 35,6 Gew.-%) gegeben. In den 37,2 g Einsatzprodukt waren 0,47 Mol Si enthalten.

Dieses Einsatzprodukt wurde unter Rühren auf 200 °C erhitzt. Danach wurden durch den Tropftrichter unter Stickstoff 101 g Tri-n-butylaluminium mit einem Al-Gehalt von 12,6 Gew.-% innerhalb von 1 Stunde und 15 Minuten bei 200 bis 205 °C zudosiert, und zwar in der Weise, daß das Tri-n-butylaluminium direkt in das Polydimethylsiloxan gelangte.

In den 101 g Tri-n-butylaluminium waren 0,47 Mol Al enthalten. Das Molverhältnis Si zu Al betrug demnach 1,00. Nachdem das Tri-n-butylaluminium zugegeben war, wurde die Reationsmischung noch 3 Stunden lang bei 200 bis 205 °C gehalten.

Nach dem Abkühlen wurden 135 g (97,7 % bezogen auf die eingesetzte Gesamtmenge) Di-n-butyl(n-butyldimethylsilanolato)aluminium erhalten. Das Produkt ist eine farblose und klare Flüssigkeit.

<u>Beispiel 3</u>

Herstellung von Diethyl(ethyldimethylsilanolato)aluminium

In einen 1-Liter Dreihalskolben, der wie in Beispiel 1 ausgerüstet war, wurden 69,3 g Diethyl(ethyldimethylsilanolato)aluminium (Al-Gehalt: 14,3 Gew.-%; Si-Gehalt: 14,8 Gew.-%; Si/Al-Molverhältnis: 1,0) gegeben und unter Rühren auf 205 °C erhitzt. Dazu wurden durch den Tropftrichter unter Stickstoff 195,7 g einer Mischung aus 116,0 g Triethylaluminium (Al-Gehalt: 23,3 Gew.-%) und 79,7 g linearem Polydimethylsiloxan (Viskosität: 100 $mm^2 \cdot s^{-1}$ ; Si -Gehalt: 37,4 Gew.-%) innerhalb von 30 Minuten bei 205 - 210 °C getropft. Das Molverhältnis Si zu Al der zugetropften Mischung betrug 1,05.

Nach Zugabe der Mischung wurde die Reaktionstemperatur noch 5 Minuten lang bei 210 °C gehalten. Danach wurde abgekühlt. Erhalten wurden insgesamt 250,3 g an Diethyl(ethyldimethylsilanolato)aluminium. Das Produkt ist eine farblose und klare Flüssigkeit. Die Ausbeute an neugebildetem Produkt betrug 181,0 g (92,5 % in bezug auf die Menge an zugetropfter Mischung).

Beispiel 4

Herstellung von Diethyl(ethyldimethylsilanolato)aluminium

Eine kleine Glasampulle wurde unter Stickstoff mit 12 mg einer Mischung aus 7,1 mg Triethylaluminium und 4,9 mg linearem Polydimethylsiloxan (Viskosität: 100 $mm^2 \cdot s^{-1}$ bei 25 °C) befüllt und zugeschmolzen. Die Probe wurde sodann in die Meßzelle eines DSC-Gerätes (DSC = Differencial scanning calorimetry) eingesetzt und erhitzt. Aus den ermittelten Daten wurden die Reaktionszeiten berechnet, die notwendig sind, um Triethylaluminium und das lineare Polydimethylsiloxan bei 180 bis 220 °C zu 90 % in Diethyl(ethyldimethylsilanolato)aluminium umzuwandeln. Die Reaktionstemperaturen und die zugehörigen, berechneten Reaktionszeiten gehen aus der folgenden Tabelle hervor.

| Reaktionstemperatur °C | Reaktionszeit min |
|---|---|
| 180 | 29 |
| 190 | 11 |
| 200 | 5 |
| 210 | 2 |
| 220 | 1 |

Beispiel 5

Herstellung von Di-n-propyl(n-propyldimethylsilanolato)-aluminium

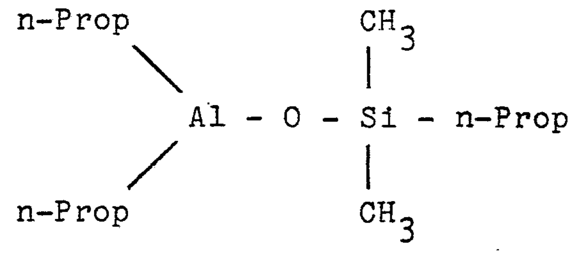

In einen 0,25 Liter-Dreihalskolben, der wie in Beispiel 1 ausgerüstet ist, wurden 37,2 g lineares Polydimethylsiloxan (Viskosität bei 25 °C: 100 $mm^2 \cdot s^{-1}$ ; Si-Gehalt: 35,6 Gew.-%) gegeben. In den 37,2 g Einsatzprodukt waren 0,47 Mol Si enthalten.

Dieses Einsatzprodukt wurde unter Rühren auf 200 °C erhitzt. Danach wurden durch den Tropftrichter unter Stickstoff 73,3 g Tri-n-propylaluminium mit einem Al-Gehalt von 17,3 Gew.-% innerhalb von 1 Stunde und 15 Minuten bei 200 bis 205 °C zudosiert, und zwar in der Weise, daß das Trin-propylaluminium direkt in das Polydimethylsiloxan gelangte.

In den 73,3 g Tri-n-propylaluminium waren 0,47 Mol Al enthalten. Das Molverhältnis Si zu Al betrug demnach 1.00.

Nachdem das Tri-n-propylaluminium zugegeben war, wurde die Reaktionsmischung noch 3 Stunden lang bei 200 bis 205 °C gehalten.

Nach dem Abkühlen wurden 108,5 g (98 % bezogen auf die eingesetzte Gesamtmenge) Di-n-propyl(n-Propyldimethylsilanolato)aluminium erhalten. Das Produkt ist eine farblose und klare Flüssigkeit.

## Ansprüche

1. Verfahren zur Herstellung von Dialkyl(alkyldimethylsilanolato)aluminium-Verbindungen der Formel

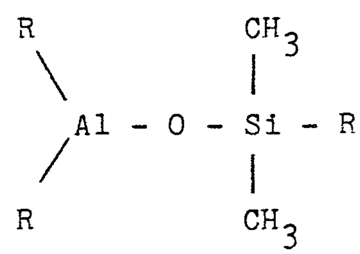

aus linearen Polydimethylsiloxanen und Aluminiumtrialkylen der Formel $AlR_3$, wobei R eine primäre Alkylgruppe mit einer C-Zahl von 1 bis 12 bedeutet, dadurch gekennzeichnet, daß man das Polydimethylsiloxan im Temperaturbereich von 150 bis 250 °C mit dem Aluminiumtrialkyl umsetzt, wobei solche Mengen an Polymethylsiloxan und Aluminiumtrialkyl eingsetzt werden, daß das Molverhältnis von Silizium zu Aluminium 0,8 bis 1,2 beträgt.

2. Verfahren gemäß Anspruch 1, dadurch gekennzeichnet, daß man das Polydimethylsiloxan zunächst auf eine Temperatur im Bereich von 150 - 250 °C erhitzt und das Aluminiumtrialkyl zudosiert.

3. Verfahren gemäß den Ansprüchen 1 und 2, dadurch gekennzeichnet, daß man die Umsetzung in einem Temperaturbereich von 180 - 220 °C durchführt.

4. Verfahren gemäß den Ansprüchen 1 bis 3, dadurch gekennzeichnet, daß man ein Aluminiumtrialkyl einsetzt, in dem der primäre Alkylrest Ethyl, Propyl oder n-Butyl ist.